# EUROPEAN PATENT APPLICATION

(11) **EP 1 156 639 A1**
(43) Date of publication of application: **21.11.2001**
(21) Application number: 00110595.6
(22) Date of filing: 18.05.2000
(51) Int. Cl.: H04M 1/02

(54) **Keyboard cover for mobile communication handsets**

(71) Applicant: ROBERT BOSCH GMBH, 70442 Stuttgart (DE)
(72) Inventor: Vidalis, Antonis, 18539, Pireus (GR)

(57) **Abstract**

The present invention relates to a retractable flap for protecting a device face such as a keyboard of a mobile telephone handset and a method for providing the same. The present invention further relates to a body cover for the device such as a mobile telephone handset such that the retractable flap is integrated in the body cover, the retractable flap being wound around a reel inside the body cover of the device so that the majority of the flap is not seen outside the body cover of the device.

## Description

### Field of the Invention

The present invention relates to covers for and methods for making covers for keyboards in general, and, more specifically, to a cover for keyboards on high- and/or low-tier mobile communication handsets.

### Background

A mobile communication system can involve one or more base stations and one or more handset receivers and transmitters. Those hand receivers and transmitters may be handsets, or mobile or portable telephones.

Mobile telephones are becoming increasingly more widely used for both personal and business concerns. A typical mobile handset involves an antenna, screen display, and keyboard. Some handsets further have a keyboard cover. The keyboard cover serves primarily to protect the keyboard of the mobile handset from accidental pushing of the keyboard buttons and to protect the typeface and appearance of the keyboard.

Some commercially available keyboard covers for handsets fold up over the keyboard of the handset. Other commercially available keyboard covers for handsets slide over the keyboard of the handset.

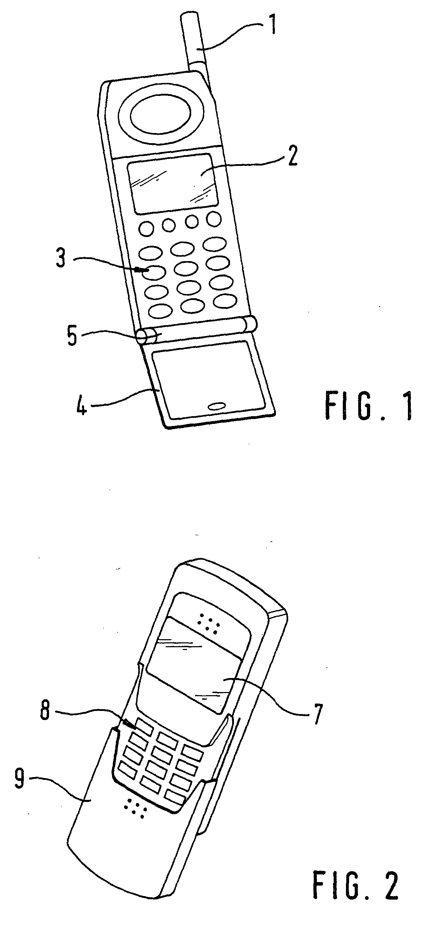

An example of a commercially available handset keyboard cover which folds up over the keyboard is shown in Figure 1. Figure 1 shows mobile telephone, model Bosch 909, having an antenna [1], screen display [2], keyboard [3], keyboard cover [4], and keyboard cover coupling device [5]. Referring to Figure 1, the keyboard cover [4] folds up via coupling device [5].

An example of a commercially available handset keyboard cover which slides over the keyboard is shown in Figure 2. Figure 2 shows a mobile telephone, model Nokia 8810, having a screen display [7], keyboard [8], and keyboard cover [9]. Keyboard cover [9] effectively slides up over the keyboard [8].

Another device being used to protect a handset keyboard is a plastic cover on the keyboard.

### Advantages and Summary of the Invention

The present invention provides a body cover, for example a mobile telephone handset, such that the body cover has a flap, the flap being disposed upon a reel and the flap being capable of wrapping itself around the reel, the reel being an integrated part of the body cover of the device. Preferably, the reel is disposed inside the body of the device.

The body cover of a mobile telephone handset is usually made of plastic since leather can be too soft, although leather can be used. Oftentimes, the body cover of the handset will be made of a hard plastic material and then a user must obtain a leather handset covering as an accessory device in order to have leather or some other material cover the handset for comfortability, gripping means, or the like.

The present invention further provides a covering for a keyboard of a mobile telephone unit. The present invention further provides that the flap is made of a flexible or elastic material. Possible materials to be used for the flap include rubber material, plastic material, leather material, nylon material or a combination of the aforesaid materials.

The present invention further provides that on a side of the flap of the body cover, a portion of the surface is embossed such that the embossed portion is capable of being used as a grip, preferably for hand or mechanical means, for opening and closing the flap over the keyboard.

Another embodiment of the present invention provides that the flap has a right side which is located between the top side and the bottom side and the flap has a left side located between the top side and the bottom side, the right and left sides of the flap each contain a push button so that when the push button on the right side of the flap or the push button on the left side of the flap are pushed, the flap is released from a closed position.

Another embodiment of the present invention provides that the flap is attached to the device. This attachment is preferably a body cover or the body of a device.

Another embodiment of the present invention provides that a soft string is disposed inside the reel which is disposed inside a device such as a mobile telephone handset. The soft string assists in the wrapping of the flap when the flap is moved from the closed position to an open position. The open position is obtained when the keyboard is open for use and the flap does not shield the keyboard.

Another embodiment of the present invention provides that an embossed section of the flap when in the open position is showing outside the body of the device. The embossed section can be easy to grip and move forward, effectively moving the flap across the keyboard in order to close the flap.

Another embodiment of the present invention provides that the flap may be moved up or down relative to the keyboard of the device or mobile telephone handset.

Another embodiment of the present invention provides that the reel is placed on a cylinder, the cylinder being disposed at a lower area of the device.

Another embodiment of the present invention provides that the flap is flexible so that the flap is capable of enwrapping itself around the reel inside the cylinder of the device.

Another embodiment of the present invention provides that the cover can be used to shield a keyboard of a mobile telephone unit.

Another embodiment provides that the flap cannot be seen outside the device when the flap is wrapped around the reel of the device, i.e., when the flap or enwrapping flap is open.

Another embodiment of the present invention is that the keyboard cover shields the keyboard of the device from unintentional pushing of any buttons of the keyboard, i.e., when the flap or enwrapping flap is closed.

Another embodiment of the present invention provides that the cover protects the keyboard from loss of color and figures, i.e., when the flap or enwrapping flap is closed.

The present invention further provides for a method for making or manufacturing the present invention by providing for a body cover [11] such that a flap [15] is disposed upon a reel [17] and is made capable of wrapping itself around the reel [17], where the reel [17] is disposed inside the body cover [11] of a device. Another embodiment of the present invention provides that the method for manufacturing the body cover is for a mobile telephone unit.

Further advantages of the present invention will become apparent from the claims and the description and drawings below.

### Drawings

Figure 1 is a schematic diagram of a handset having a fold-down keyboard cover;
Figure 2 is a schematic diagram of a handset having a sliding-over keyboard cover;
Figure 3 is a schematic diagram showing one embodiment according to the present invention in which the flap is in the closed position;
Figure 4 is a schematic diagram showing another embodiment according to the present invention in which the flap is in the open position; and
Figure 5 is a schematic diagram showing a more detailed view of the reel mechanism inside the body of a device of another embodiment according to the present invention.

### Description

The present invention will now be described with particular reference to exemplary embodiments in the context of its use as a cover for a keyboard of a mobile telephone.

The scope of the present invention is an enwrapping flap and a body cover having an integrated enwrapping flap, particularly the body cover of a mobile telephone handset.

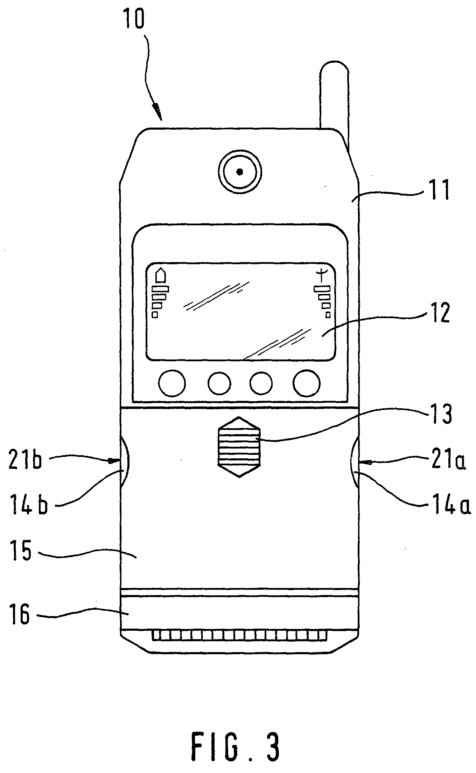

Referring to Figure 3, an embodiment of the present invention is shown where the flap [15] is in a closed position. The flap [15] is attached to a mobile telephone handset [10] having a body cover [11], a display screen [12], two push-buttons [14a, 14b]. The mobile telephone handset [10] further has a cylinder [16]. In the closed position as shown, the flap [15] has a gripping surface [13]. On the sides of the flap [15], or "e-flap" [15] or enwrapping flap [15], the flap [15] has two means [14a, 14b] for latching or attaching or connecting to the cover of the handset. The flap [15] may be made of any elastic or flexible material including leather, nylon, and soft plastics. The gripping surface [13] may be an embossed surface or the like. In the alternative, the gripping surface [13] may be a rough surface or sticky surface or other type of surface which would lend the flap [15] to be easily gripped or moved by human or mechanical means. The two means [14a, 14b] for latching or attaching or connecting the flap [15] to the handset [10] or other device, may be push-button devices or latches or even adhesive or magnetic buttons or contact spaces or devices.

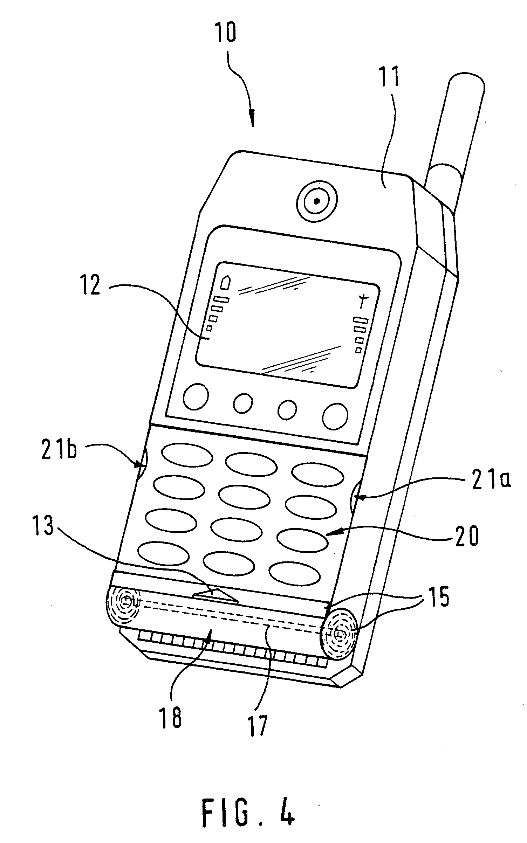

Referring to Figure 4, an embodiment of the present invention is shown where the flap [15] is in an open position. The flap [15] is partially contained within the mobile telephone handset [10]. The mobile telephone handset [10] has a body cover [11], display screen [12], keyboard [20], multiple means [21a, 21b] connected to the handset [10] for connecting or latching or attaching the flap [15] with its corresponding means [14a, 14b]. When the flap [15] or "e-flap" [15] is in the open position the flap [15] does not cover the keyboard [20] and it is not connected or disposed near the connecting means [21a, 21b] of the handset [10]. In the open position, the flap [15] can be partially viewed outside the handset [10] and body cover [11]. Preferably, only the portion of the flap [15] having the gripping surface [13] is visible outside of the handset [10]. At the lower end of the handset [10], that is the area below the keyboard [20], a cylinder [18] having a reel [17] is located inside the lower end of the body cover [11] When the flap [15] is in the open position, the remaining portion of the flap not visible outside of the handset [10] is wound around the reel [17] inside the cylinder [18]. The cylinder [18] contains and guides the flap being wound on the reel [17] inside the cylinder [18]. The cylinder [18] may be a shape other than a cylinder-shape, including a rectangular or other geometrically-shaped area in which a remaining portion of the flap [15] is contained when wound around a reel [17] or reel-like device.

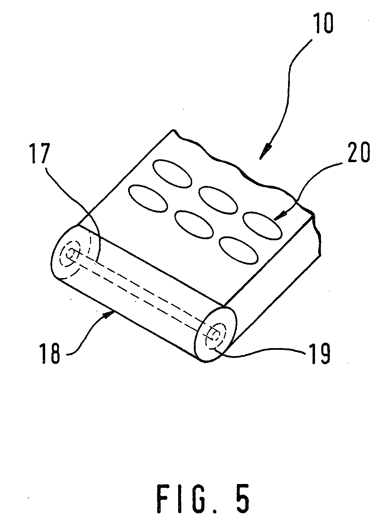

Referring to Figure 5, another embodiment of the present invention is shown where the flap [15] is in an open position and the keyboard [20] is not covered by the flap [15]. The cylinder [18] having a reel [17] disposed within is situated either inside or outside the handset [10] at the lower end of the handset [10]. The flap [15] is wound around the reel [17] inside the cylinder [18]. Further, a string [19], or soft string, is wound around the reel [17] to provide a tension by use which the flap [15] easily winds around the reel [17] and easily unwinds from the reel [17]. The string [19] is preferably not viewable from the outside of the handset [10].

One embodiment provides that string [19] is an elastic string which is mechanically fixed to the enwrapping flap. The elastic string is loose and without tension in the open flap position, i.e., when the keyboard is visible or not covered by the flap. As the flap [15] is closed and fixed to the gripping surface [13], the elastic string is being tensioned. When the flap is released from the closed position, i.e., when the flap [15] covers the keyboard [20] or the keyboard [20] is not visible, the elastic string aids in getting the flap [15] back into the open flap position, i.e., the keyboard is visible, as shown in Fig. 4.

Other embodiments may be made with respect to the present invention. Another embodiment can involve using a motor means to wind and unwind the flap or cover of the present invention. Other embodiments may involve different embossed or gripping surfaces on the flap or cover of the present invention.

## Claims

1. A body cover [11] **characterized in that** the cover [11] has a flap [15], the flap [15] being disposed upon a reel [17] and being capable of wrapping itself around the reel [17], the reel [17] being disposed inside the body cover [11] of a device.

2. The cover [11] according to claim 1, **characterized in that** the device is a mobile telephone unit [10].

3. A body cover [11] of a mobile telephone handset device [10] **characterized in that** the body cover [11] contains and disposes a flap [15] for covering a keyboard [20] of the device [10], the flap [15] being integrated in a lower end of the body cover [11] of the device [10].

4. The cover [11] according to any of the preceding claims, **characterized in that** the flap [15] is made of a flexible or elastic material.

5. The cover [11] according to any of the preceding claims, **characterized in that** the flap [15] is made of rubber material, plastic material, leather material, nylon material or a combination of the aforesaid materials.

6. The cover [11] according to any of the preceding claims, **characterized in that** the flap [15] has a top side and a bottom side, the top side of the flap [15] has a small, embossed surface [13], the small embossed surface [13] being capable of being used as a grip for opening and closing the flap [15] over the keyboard [20].

7. The cover [11] according to any of the preceding claims, **characterized in that** the flap [15] has a right side which is located between the top side and the bottom side and the flap [15] has a left side located between the top side and the bottom side, the right and left sides of the flap each contain a push button so that when the push button [14a] on the right side of the flap or the push button [14b] on the left side of the flap are pushed, the flap is released from a closed position.

8. The cover [11] according to any of the preceding claims, **characterized in that** the flap [15] is attached to the device.

9. The cover [11] according to any of the preceding claims, **characterized in that** a soft string [19] is disposed inside the reel [17] and the soft string [19] assists in the wrapping of the flap when the flap [15] is moved from the closed position to an open position, the open position being when the keyboard [20] is open for use and not shielded by the flap [15].

10. The cover [11] according to any of the preceding claims, **characterized in that** the embossed surface [13] of the flap when in the open position is showing outside the cover [11] of the device and may be moved forward across the keyboard [20] in order to close the flap [15].

11. The cover [11] according to any of the preceding claims, **characterized in that** the flap [15] may be moved up or down relative to the keyboard [20] of the device.

12. The cover [11] according to any of the preceding claims, **characterized in that** the reel [17] is placed in a casing, preferably a cylinder-shaped casing [18], the casing being disposed at a lower area of the device.

13. The cover [11] according to any of the preceding claims, **characterized in that** the flap [15] is elastic so that the flap [15] is capable of enwrapping itself around the reel [17] inside the casing of the device.

14. The cover [11] according to any of the preceding claims, **characterized in that** the flap [15] is used to shield a keyboard [20] of a mobile telephone unit [10].

15. The cover [11] according to any of the preceding claims, **characterized in that** when the flap [15] is wrapped around the reel [17] of the device, the flap [15] cannot be seen outside of the device.

16. The cover [11] according to any of the preceding claims, **characterized in that** the flap [15] shields the keyboard [20] of the device from unintentional pushing of any buttons of the keyboard and from loss of color and labeling.

17. A method for making a retractable flap [15] for a device as according to any of the preceding claims.
